# EUROPEAN PATENT APPLICATION

(11) **EP 1 655 229 A1**
(43) Date of publication of application: **10.05.2006**
(21) Application number: 05256837.5
(22) Date of filing: 04.11.2005
(51) Int. Cl.: B65B 51/30, B29C 65/00, B29C 65/74

(54) **Sealing mechanism and method for packaging device**

(30) Priority: 05.11.2004 US 981818
(71) Applicant: Rennco, Inc., Homer MI 49245 (US)
(72) Inventor: Thurgood, Robin G., Marshall, Michigan 49068 (US); Laubenthal, Kevin J., Battle Creek, Michigan 49017 (US); Roosa, David, Marshall, Michigan 49068 (US); Vincent, Dale R., Tekonsha, Michigan 49092 (US)
(74) Representative: Cheyne, John Robert Alexander M.

(57) **Abstract**

The present invention provides a sealing mechanism in a vertical film bagging device. The sealing mechanism comprises an instrument having a sealing and separating element, a first clamping element, a second clamping element opposed to the first clamping element, and a biasing element connected to the first clamping element and the instrument that allows at least a portion of the film to be gripped by at least a portion of the first clamping element and at least a portion of the second clamping element.

## Description

### Technical Field

The present invention generally relates to a packaging device, and, more specifically, the present invention relates to an apparatus and method for packaging.

### Background

From the invention of the plastic bread bag that maximizes bread freshness and helps maintain sterility to the introduction of the jewel case and protective sleeves that hold compact discs, packaging is a part of the manufacturing process for most products found in commerce today. With the ever increasing volume of products being sold and distributed, packaging devices have been implemented to package goods at a high rate of speed.

A problem with vertical packaging devices occurs due to the vertical transfer of the package and its likely contents. More specifically, a downward force component is added to the film which inhibits the sealing and severing of the film.

### Summary

An apparatus and method are provided for reducing the number of steps in a process for packaging items. The present invention provides a sealing mechanism in a vertical film bagging device. The sealing mechanism comprises an instrument having a sealing and separating element, a first clamping element, a second clamping element opposed to the first clamping element, and a biasing element connected to the first clamping element and the instrument that allows at least a portion of the film to be gripped by at least a portion of the first clamping element and at least a portion of the second clamping element. The present invention will be more fully understood upon reading the following detailed description in conjunction with the accompanying drawings.

### In the Drawings

The accompanying drawings illustrate various embodiments of the present apparatus and method and are a part of the specification. The illustrated embodiments are merely examples of the present apparatus and method and do not limit the scope of the disclosure.

Fig. 1 illustrates a side view according an embodiment of the present invention;

Fig. 2 illustrates a perspective view of according to an embodiment of the present invention;

Fig. 3a illustrates a cross sectional view of according to an embodiment of the present invention;

Fig. 3b illustrates a cross sectional view according to an embodiment of the present invention;

Fig. 3c illustrates a cross sectional view according to an embodiment of the present invention;

Fig. 3d illustrates a cross sectional view according to an embodiment of the present invention;

Fig. 3e illustrates a cross sectional view according to an embodiment of the present invention;

Fig. 3f illustrates a cross sectional view according to an embodiment of the present invention;

Fig. 4 illustrates a side view according to an embodiment of the present invention;

Fig 4a illustrates a side view according to an embodiment of the present invention;

Fig. 5 illustrates a perspective view according to an embodiment of the present invention; and

Fig. 6 illustrates a side view according to an embodiment of the present invention.

### Detailed Description

In the following description, for purposes of explanation, numerous specific details are set forth in order to provide a thorough understanding of the present method and apparatus. It will be apparent, however, to one skilled in the art that the present method and apparatus may be practiced without these specific details. Reference in the specification to "one embodiment" or "an embodiment" means that a particular feature, structure, or characteristic described in connection with the embodiment is included in at least one embodiment. The appearance of the phrase "in one embodiment" in various places in the specification are not necessarily all referring to the same embodiment.

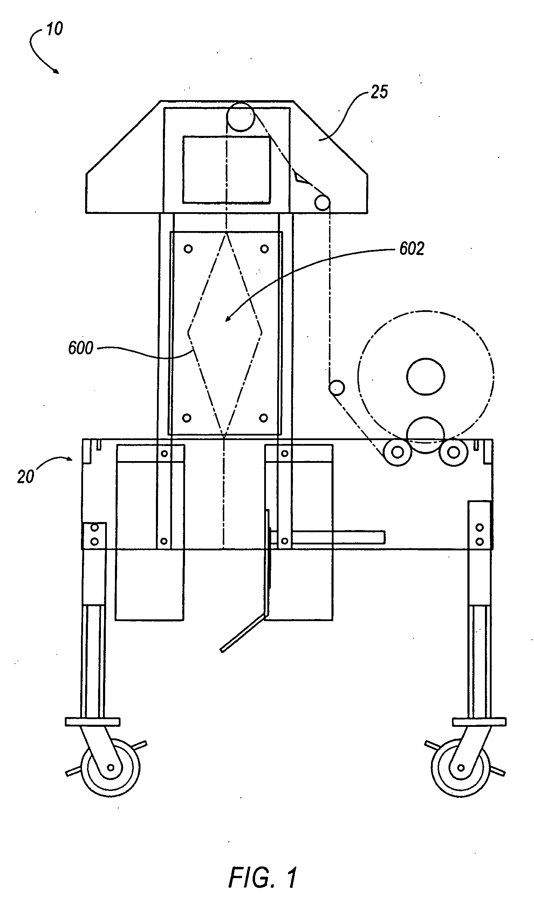

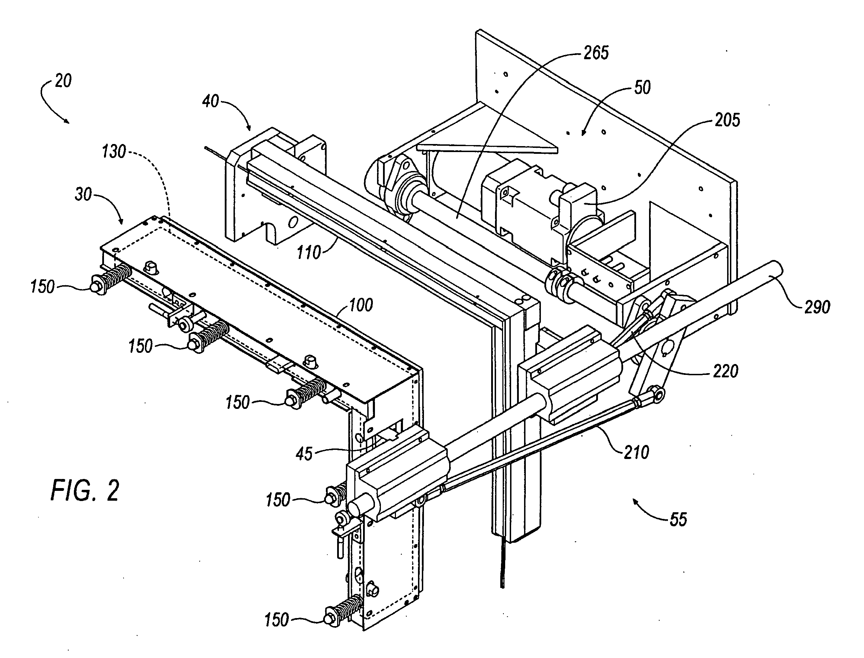

Referring to Fig. 1, a general orientation illustrating an embodiment of a packaging device according to the present invention is shown and described at 10. The packaging device 10, as illustrated, includes a base 20 and a film feed 25 adapted to pass film 600 through portions of the base 20. The base 20 includes a motor source 50 (See Fig. 2) configured to communicate movement thereto for sealing and separating the film 600 passing through the base 20. The motor source 50 may be a motor, hydraulic, pneumatic or other energy source. In the embodiment described, for purposes of example, the motor source 50 is a motor. Although in the illustrated arrangement film feed 25 is depicted above base 20, other orientations of the system 10 are equally foreseen to one of ordinary skill in the art. Thus, for example, film feed 25 may instead be situated on either side of packaging device 10, or even thereunder, to provide film 600 through at least portions of the base 20. Moreover, as the illustration depicts film feed 25 physically connected to base 20, film feed 25, alternatively, may exist as a wholly separate structure.

With reference now to Fig. 2, an embodiment of base 20 is shown and described. Base 20 is illustrated as including first and second clamping elements 30, 40 and an motor source 50. The motor source 50 physically communicates with first and second clamping elements 30, 40 to draw and retract each of the first and second clamping elements 30, 40 towards and away from one another.

In an embodiment, an instrument 130 is disposed within the first clamping element 30. The instrument 130 is movably positioned within first clamping element 30 to communicate or transfer movement from the motor source 50 to the first clamping element 30 through structures that will be further discussed. Various elements, spacing or other known structures may be used to provide the movable arrangement between first clamping element 30 and the instrument 130. For example, mechanisms including bearings or sliding elements and the like may be used to create a movable arrangement between the first clamping element 30 and instrument 130. A space may also be provided between first clamping element 30 and instrument 130 to allow for movability. In an alternate embodiment, instrument 130 may be located in second clamping element 40 instead of first clamping element 30. Also, in an alternate embodiment, instrument 130 may be positioned outside or adjacent to first clamping element 30 or second clamping element 40.

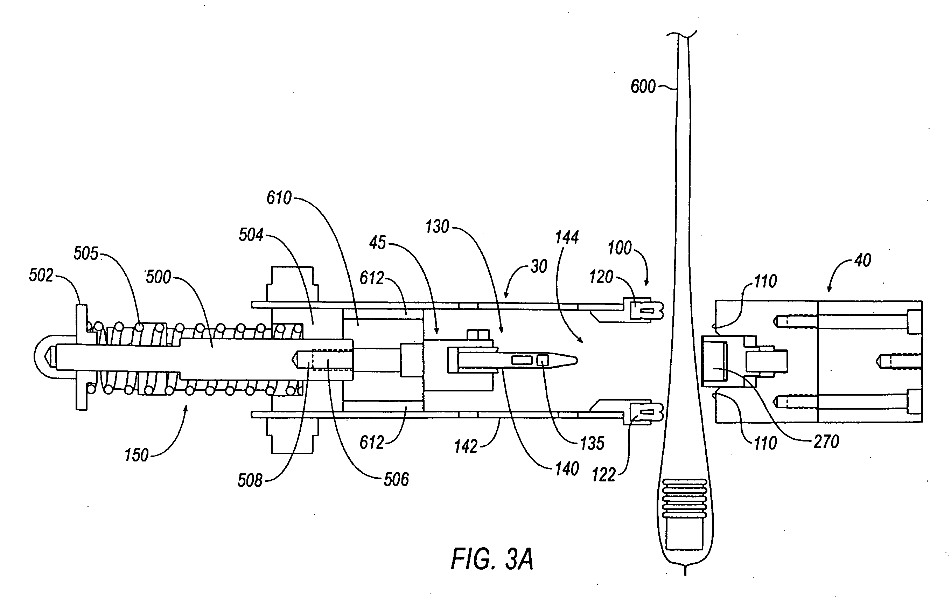

Referring now to Fig. 3a, the first and second clamping elements 30, 40 are described in greater detail. The illustration in Fig. 3a shows a cross-sectional view of an embodiment of the first and second clamping elements 30, 40 in a gripping arrangement. As illustrated, the first clamping element 30 includes a mating side 100 that is opposed to a mating side 110 of the second clamping elements 40. The mating side 100 of the first clamping element 30 includes grip members 120, 122 that clamps or grips film 600 that passes between the grip members 120, 122 and the mating side 110. The grip members 120, 122 may be constructed of rubber, plastic, or other material able to grip material passing therethrough. It should be noted that the grip member 120, 122 may, similarly, be located on the second element 40.

In the illustration shown in Fig. 3a, the first clamping element 30 includes an instrument 130 that is configured to seal and separate film 600 passing between the first and second clamping elements 30, 40. In one embodiment, the instrument 130 includes, among other possible orientations, a heating element 135 disposed within a projection 140 extending from the instrument 130. The instrument 130 also includes support 610 having bearing elements 612 that provides the sliding relationship between separating device 130 and the perimeter 142.

In the depicted orientation, when the first clamping element 30 and second clamping element 40 close, the film 600 is pinched between the two elements 30, 40, and exposed to the instrument 130 such that the film 600 is severed and a seal is formed on either side thereof. This operation will be described in greater detail hereinafter.

With continued reference to Fig. 3a, the perimeter 142 defines a central portion 144. In the illustration, the perimeter 142 includes the two grip members 120, 122 attached on upper and lower portions of the first clamping element 30.

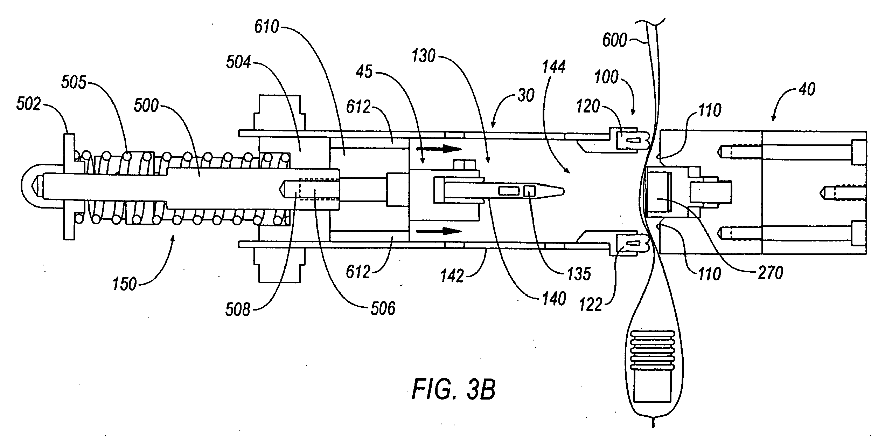

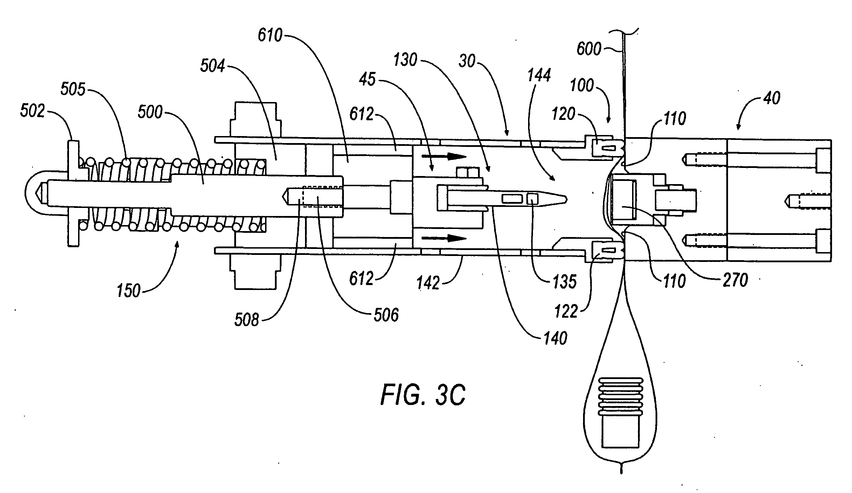

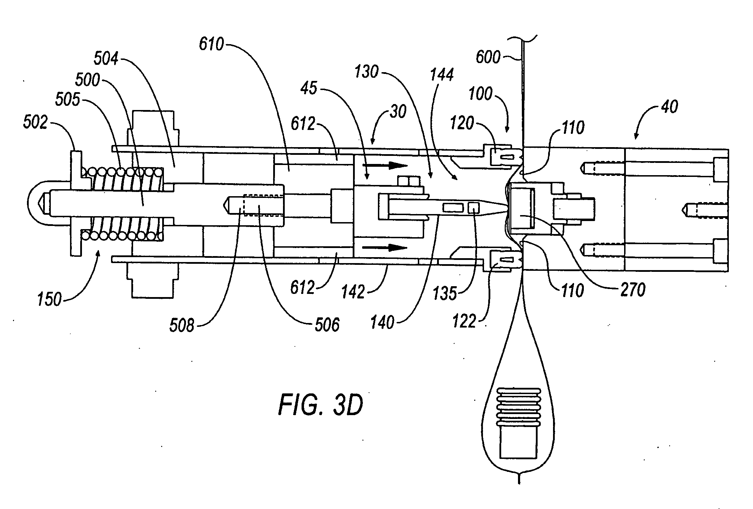

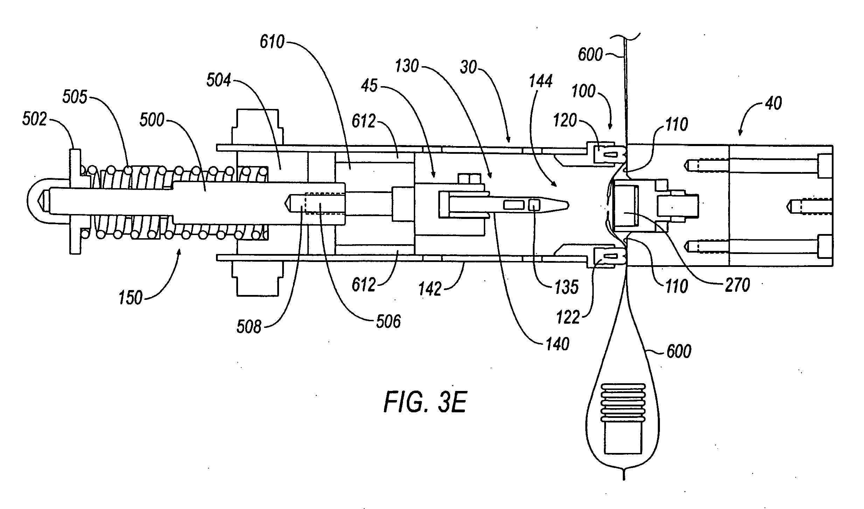

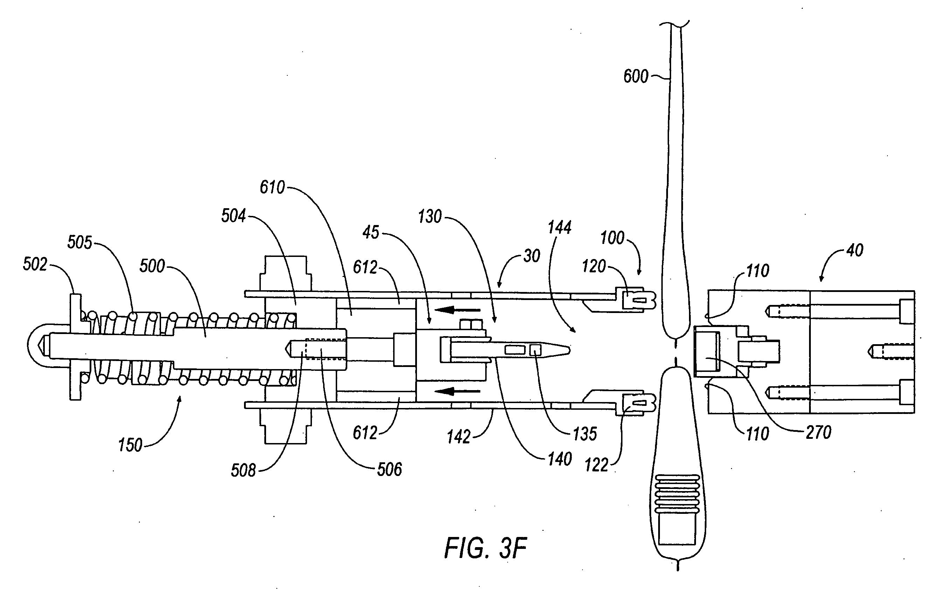

The instrument 130 is connected to first clamping element 30 using the biasing devices 150. Fig. 3 illustrates at least one biasing device 150 having a center shaft 500, cap 502, support 504, and spring 505. The center shaft 500 defines a threaded aperture 506 wherein a screw 508 attaches the biasing device 150 to instrument 130. The screw 508 is attached to the support 610, which is, in turn, attached to the first clamping element 30. Although a threaded aperture 506 and a screw 508 are disclosed, various other connection arrangements may be used as will be recognized by one of ordinary skill in the art.

A cap 502 is threadably engaged to the center shaft 500. The spring 505 rests over the center shaft 500 and is positioned between the cap 502 and the support 504. The compression of the spring 505 may be adjusted by threadably rotating the cap 502. More specifically, loosening the cap 502 reduces the spring force between the cap 502 and the support 504. Likewise, tightening of the cap 502 increases the spring force between the support 504 and the cap 502. Increasing the spring force increases the amount of force required to move the instrument 130 to the sever and seal position as shown in Fig. 3d (as will be described). Likewise, reducing the amount of spring force reduces the amount of force required to move the instrument 130 to this sever and seal position.

As will be readily understood by review of Figs. 3a through 3f movement of the instrument 130 toward the right drives center shaft 500 and cap 502 likewise toward the right and away from support 504 to compresses spring 505, thereby resulting in a greater force against support 504. (See Fig. 3a). This force presses against support 504, rigidly attached to first clamping element 30, to move support 504 and therefore first clamping element 30 also to the right until reaching second clamping element 40. Continued movement of instrument 130, as shown in Figs. 3c and 3d, compresses spring 505 and spaces the support 610 from the support 504 to close the instrument 130 against the film 600 to seal and separate as will be discussed. Fig 3e illustrates the first and second clamping elements in a closed or resting position, after the instrument has sealed and separated the film 600.

As shown in Fig. 3f, movement of the instrument 130 in the opposite direction causes support 610 to abut against support 504 to thereby cause first clamping element 30 to move away from second clamping element 40.

Although the biasing device 150 is shown using spring 505, one skilled in the art will understand that other biasing devices are equally foreseen and may be substituted therefor. Thus, for example among other possibilities, flexible foam padding, rubber or other elastic features may be implemented.

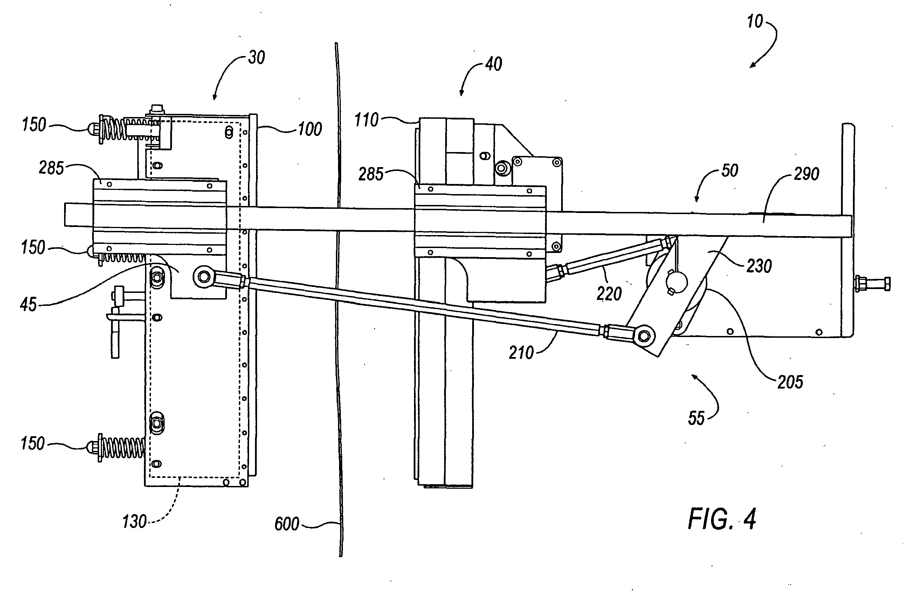

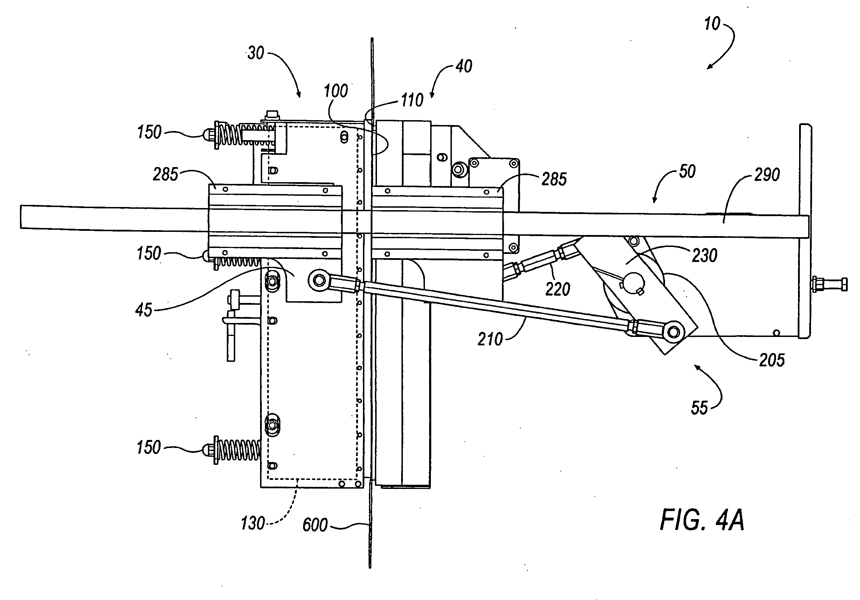

Fig. 4 illustrates an embodiment of a driving mechanism 55 for transmitting motion from the motor source 50 to the first clamping element 30. Fig. 4 illustrates one configuration for driving the first clamping element 30 against the second clamping element 40. The motor source 50, illustrated adjacent to the second clamping element 40, provides energy to driving mechanism 55 which is thereafter transmitted to the first clamping element 30 and second clamping element 40 through support members 285 attached to the instrument 130 and the second clamping element 40. The support members 285 are movably attached to a support arm 290, the combination of which provides added structural support to ease or aid the movement of first and second clamping elements 30, 40. The support members 285 include bearings or sliding elements and the like to create a movable arrangement between the clamping elements 30, 40 about the support arm 290.

Driving mechanism 55 includes a pair of drive arms 210, 220 attached to a motor plate 230. The motor plate 230 is connected to a motor 205 of motor source 50. The first drive arm 210 is coupled to a first portion of the motor plate 230 and the second drive arm 220 is attached to a second region of motor plate 230. The first drive arm 210 is connected with the instrument 130, and the second drive arm 220 is connected with the second clamping element 40.

As will be understood based on a review of the drawings and the description herein, as the first drive arm 210 is connected with the instrument 130, the drive mechanism 55 drives the instrument 130. The instrument 130, through the biasing device 150, then drives the first clamping element 30.

For illustrative purposes the following operation is described in two parts or cycles. The first cycle refers to the clamping of the first and second clamping elements 30, 40 and includes the instrument 130 engaging the film 600. The second cycle refers to the retraction of the instrument 130 and the first and second elements 30, 40. Although this is described as a two cycle process, the opening and closing of the first and second elements 30, 40 could alternatively be practiced using a single cycle.

In operation, an item is first placed in area 602 (see Fig. 1). The item and the film 600 are then indexed downwardly with respect to the figure into the position shown in figure 3a. The motor source 50 is then activated, causing the motor plate 230 to be rotated in a counterclockwise direction. This moves the drive arms 210, 220 and therefore the first and second clamping elements 30, 40 (see Fig. 4 and 4a). This action draws the elements 30, 40 toward one another in a clamping fashion as the bottom region of the motor plate 230 rotates away from first and second clamping elements 30, 40. With respect to the first clamping element 30, however, the drive arm 210 draws the first clamping element 30 toward second clamping element 40 by the recessed instrument 130 attached to the support member 285.

With reference to Fig. 3b the gripping members 120, 122 engage the film 600 to pinch the film 600 against the mating side 110 of the second clamping element 40. Fig. 3c illustrates the instrument moving towards the film 600, as the motor plate 230 continues to rotate in the counterclockwise direction. In this orientation, energy that was once directed to the first clamping element 30 through the spring 505 is redirected to the instrument 130 to move the instrument 130 and the instrument 130 towards the film 600. The continued movement of instrument 130, as shown in Fig. 3d, compresses spring 505 and spaces the support 610 from the support 504 to close the instrument 130 against the film 600 to seal and separate. Upon film separation, one of the grip member 122 supports the sealed package and the other grip member 120 retains the remairting film until the cycle to open first and second clamping elements 30, 40 initiates.

The second cycle of the driving mechanism 55 opens the first and second clamping elements 30, 40 as shown in Fig. 3f. Specifically, the motor source 50 causes the motor plate 230 to rotate in the clockwise direction. This moves the drive arms 210, 220 and therefore the instrument 130 and the first and second clamping elements 30, 40 (see Fig. 4 and 4a). This action retracts the instrument by diminishing the tension on the spring SOS, withdrawing the element from the film 600, and moving the first and second clamping elements 30, 40 as the bottom region of the motor plate rotates towards first and second elements 30, 40. With respect to the first clamping element 30, however, the drive arm 210 retracts the first clamping element 30 away from the second clamping element 40 by the recessed instrument 130 attached to the support member 285. Once the gripping members 120, 122 disengage the mating side 110 of second element 40, the sealed package is further indexed downwardly through the bottom of the packaging device 10.

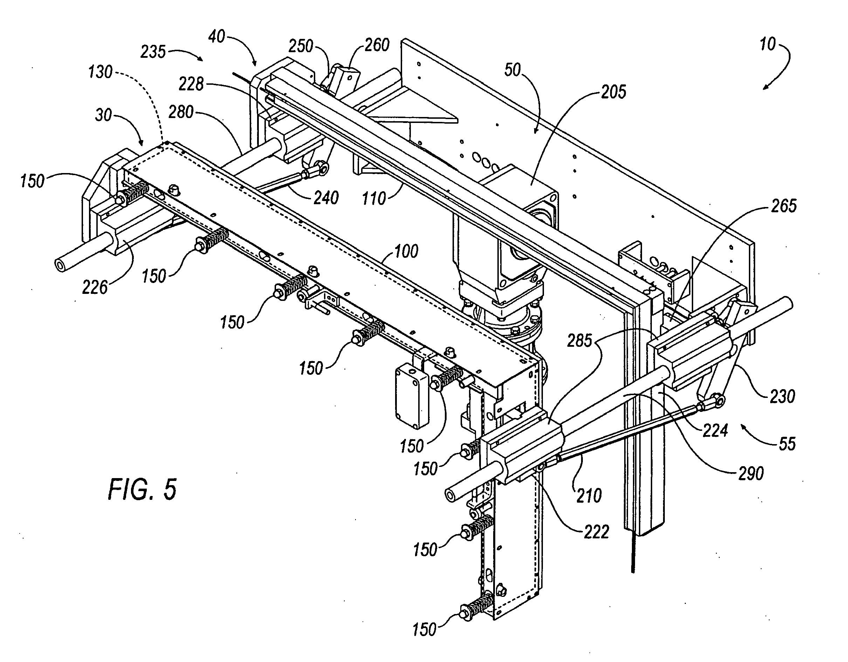

In another embodiment, illustrated in Fig. 5, a second driving mechanism 235 is depicted having a second pair of drive arms 240, 250 attached to a second motor plate 260. In this orientation the first pair of drive arms 210, 220 are in communication with a first region 222 of instrument 130 and a first region 224 of the second clamping element 40. The second pair of drive arms 240, 250 are in communication with a second region 226 of the instrument 130 and a second region 228 of the second clamping element 40. As illustrated, both the first pair of drive arms 210, 220 and the second pair of drive arms 240, 250 are depicted substantially separated as this structural arrangement at least provides synchronous movement and enhanced support. It is equally plausible, however, to attach the drive arms in other positions about the instrument 130 and the second clamping element 40. Thus, for example, the drive arms may be positioned closer together and one of ordinary skill in the art will recognize these possibilities.

In the depicted structural arrangement, the motor 205 is illustrated positioned between the first and second driving mechanisms 55, 235. Furthermore, the motor 205 is connected to a drive shaft 265 which interfaces with the motor plates 230, 260 to communicate rotational movement thereto. While a drive shaft 265 is disclosed, other structural arrangements to communicate the motion from motor 205 to at least one of the motor plate 230, 260 will be apparent to one of ordinary skill in the art. Thus, for example, a belt system may be substituted therefor. Such a drive belt system could, similarly, replace the drive arms the driving mechanism 55.

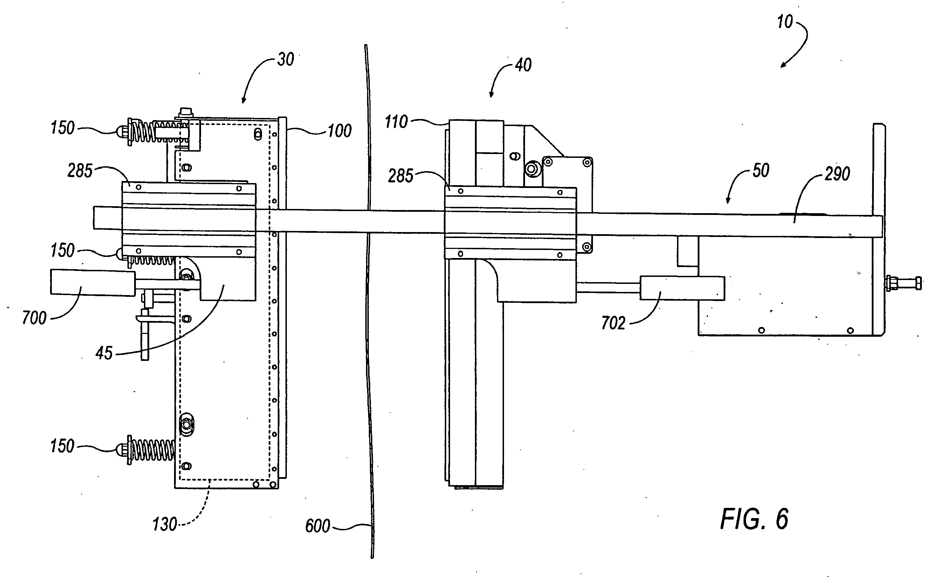

With reference to Fig. 6, an alternate embodiment for the driving mechanism 55 is shown and described. The driving mechanisms 55,235 and motor source 50 are replaced by a first drive member 700 connected to the instrument 45 and a second drive member 702 connected to the second clamping element 40. The drive members are the motor sources for this embodiment. However, multiple motor source may be utilized. One of ordinary skill in the art, in combination with the present disclosure, will additionally recognize that the device may be practiced using one drive member 700 connected to the instrument 45 while the second clamping element 40 is fixed or vice versa. The motor source 50 may be a solenoid, a pneumatic cylinder, or hydraulic cylinder.

In an embodiment, the first drive member 700 may house at least one of the biasing devices 150. More specifically, the first drive member 700 may define an opening or arrangement that integrates the biasing device 150 within the first drive member 700 to transfer movement from the drive member 700 to the first clamping element 30.

Various alternative structures may be substituted for the motor plates 230, 260 that result in a substantially similar function and will be apparent to one of ordinary skill in the art. Thus, for example, a disc may be used wherein the drive arms are similarly attached on opposite regions of the disc.

In another embodiment, each of the first and second clamping elements 30, 40 may be driven using independent motor sources, and, in even another embodiment, each of the driving mechanisms 55, 235 are actuated by independent motors.

In another embodiment, and as further illustrated in Fig. 3, the central portion of the second clamping element 40 includes a substantially flexible receiving material 270 or other elastic mechanism to dampen or receive projection 140. In another embodiment, the projection 140 and the sealing element 135 of first clamping element 30, and the flexible receiving material 270 of second clamping element 40 are removably attached.

In yet another embodiment, as illustrated in Fig. 2, Fig 4, Fig. 4a, Fig. 5, and Fig. 6 each of the first clamping element 30 and the second clamping element 40 have a horizontal region in the top portion of the base 20 extending substantially therealong and a vertical region extending substantially therebelow into the frontal central portion of the base 20. Such an orientation, therefore, is described as substantially forming an L-shape.

As the items are dropped from the base 20 into the bottom of the unit, a conveyor may be attached thereto to transfer the packaged units away from the device 10. In even another embodiment, a container may be placed under the bottom of the unit to collect the packages.

In yet another embodiment, a control interface is disclosed at least in communication with the motor 205. The control interface may include adjustments to communicate a variance in speed of the device 10, speed of the driving mechanism 55, speed of the film, speed of the conveyor or to simply power on and power off the packaging device 10.

As Fig. 1 illustrates, film may rest on the top of base 20. The film, however, may be placed in any area convenient to film feed 25 and base 20. For example, the film may be positioned laterally, or above, the film feed 25. Likewise, in this configuration, the film is presented to the system 10 in the form of a roll, however, various film dispensing methods are known in the art that adequately perform substantially equivalent functions to that herein described, and, may equivalently be substituted therefor. Thus, for example, sheets and the like are equally foreseen.

While the invention has been specifically described in connection with certain specific embodiments thereof, it is to be understood that this is by way of illustration and not of limitation, and the scope of the appended claims should be construed as broadly as the prior art will permit.

## Claims

1. A sealing mechanism for a vertical film bagging device, said sealing mechanism comprising:
an instrument having a sealing and separating element;
a first clamping element;
a second clamping element opposed to the first clamping element; and
a biasing element connected to the first clamping element and to the instrument that allows at least a portion of the film to be gripped by at least a portion of the first clamping element and at least a portion of the second clamping element.

2. The sealing mechanism according to claim 1, further comprising a driving mechanism connected to said instrument and adapted to drive said instrument and said first clamping element toward said second clamping element.

3. The sealing mechanism according to claim 2, further comprising a motor source adapted to communicate movement to at least said first clamping element.

4. The sealing mechanism according to claim 3, wherein said driving mechanism is further connected to said second element.

5. The sealing mechanism according to claim 3, wherein:
said motor source includes a motor;
said driving mechanism includes at least one motor plate connected to said motor;
at least a pair of connecting arms devices;
at least a first of said connecting arms is connected to said instrument; and
at least a second of said connecting arms is connected to said second clamping element.

6. The sealing mechanism according to claim 1, wherein said first clamping element includes at least one gripping member attached thereto.

7. The sealing mechanism according to claim 1, wherein:
said first clamping element defines a central portion having adjacent edges;
said instrument is positioned within said central portion; and
each of said adjacent edges includes a respective gripping member;
wherein said gripping member pinches film against said second clamping element when said first clamping element and said second clamping element are in a closed position.

8. The sealing mechanism according to claim 7, wherein said instrument is at a recessed positioned with respect to said edges.

9. The sealing mechanism according to claim 8, wherein said biasing element is adapted to allow said instrument to move from said recessed position closer to said edges from said recessed position.

10. The sealing mechanism according to claim 5, further comprising:
a shaft connected to the motor plate; and
a belt engaged to the shaft and the motor to transmit rotational energy from the motor to the shaft.

11. The sealing mechanism according to claim 5, further comprising an output shaft connected to the motor plate adapted to transmit rotational energy from the motor to the motor plate.

12. The sealing mechanism according to claim 1, wherein said biasing device further comprises:
a shaft element connected to said instrument; and
a biasing element in an engagement with the instrument and first clamping element;
wherein the shaft element is adapted to apply force against the biasing element to cause the biasing element to apply force against the instrument when the driving mechanism drives the instrument toward the second clamping element.

13. The sealing mechanism according to claim 12, further comprising:
a cap portion attached to one end of the shaft element; and
a support attached to the first clamping element;
wherein the shaft element passes through the support; and
wherein the biasing element is positioned between the support and the cap portion.

14. The sealing mechanism according to claim 13, wherein the cap portion is threadably attached to the shaft element such that tightening of the cap increases the force of the biasing element and loosening of the decreases the force of the biasing element.

15. The sealing mechanism according to claim 14, wherein the biasing element is a spring.

16. The sealing mechanism according to claim 7, wherein the gripping member for one of said adjacent edges is the at least the portion of the first clamping element.

17. The sealing mechanism according to claim 3, wherein said motor source is a hydraulic, pneumatic, or electric cylinder.

18. A packaging method in a vertical film packaging system, said method comprising:
providing an instrument connected to a first clamping element through a biasing member;
moving the instrument toward a second clamping element until said biasing member moves said first clamping element against said second clamping element to clamp film positioned therebetween; and
continuing to move said instrument toward said second clamping element until said instrument is in a position to sever and seal the film.

19. The packaging method according to claim 18, wherein a driving mechanism performs the moving and continuing steps in one cycle.

20. The packaging method according to claim 18, further comprising:
a shaft element connected to the instrument;
wherein the moving step compresses the biasing member between the portion of the shaft element and the first clamping element.

21. The packaging method according to claim 20, further comprising:
a motor element;
a driving mechanism;
wherein the motor element drives the driving mechanism;
wherein the driving mechanism is attached to the instrument to move the instrument toward the second clamping element.

22. The packaging method according to claim 21, wherein the motor element is a pneumatic, hydraulic, or electric cylinder.

23. The packaging method according to claim 21, wherein the driving mechanism is connected to the second clamping element to drive the second clamping element toward the first clamping element.

24. The method according to claim 18, further comprising the step of moving the instrument away from the second clamping element after the film has been severed and sealed.

25. The method according to claim 24, wherein the step of moving the instrument away further comprises:
providing a support connected to the first clamping element;
moving the instrument away from the second clamping element and toward the support; and
moving the instrument against the support to move the first clamping element away from the second clamping element.

26. The method according to claim 18, wherein said first clamping element includes at least one gripping member that allows at least a portion of film to be gripped by at least a portion of the clamping element and at least a portion of the second clamping element.

27. A film packaging system comprising:
means for gripping film; and
means for sealing and separating film passing between said film gripping means in substantially one motion.

28. The film packaging system according to claim 26, further comprising means for transferring movement to said sealing and separating means when said film gripping means substantially close such that said sealing and separating means is adapted to interface film.
